# EUROPÄISCHE PATENTSCHRIFT

(11) **EP 2 955 349 B1**
(45) Veröffentlichungstag und Bekanntmachung des Hinweises auf die Patenterteilung: **01.02.2017**
(21) Anmeldenummer: 15001582.4
(22) Anmeldetag: 26.05.2015
(51) Int. Cl.: F01N 3/20, F01N 9/00, F01N 3/10

(54) **VERFAHREN ZUM BETREIBEN EINER VERBRENNUNGSKRAFTMASCHINE UND ABGASNACHBEHANDLUNGSEINRICHTUNG EINER SOLCHEN VERBRENNUNGSKRAFTMASCHINE**
METHOD FOR OPERATING A COMBUSTION ENGINE AND EXHAUST GAS AFTERTREATMENT DEVICE OF SUCH COMBUSTION ENGINE
PROCÉDÉ DE FONCTIONNEMENT D'UN MOTEUR À COMBUSTION INTERNE ET DISPOSITIF DE POST-TRAITEMENT D'UN TEL MOTEUR

(30) Priorität: 12.06.2014 AT 4672014
(43) Veröffentlichungstag der Anmeldung: 16.12.2015
(73) Patentinhaber: GE Jenbacher GmbH & Co OG, 6200 Jenbach (AT)
(72) Erfinder: Hillen, Friedhelm, 6200 Jenbach (AT); Bhuvaneswaran, Manickam, 6240 Rattenberg (AT); Bienholz, Arne, 64285 Darmstadt (DE)
(74) Vertreter: Torggler & Hofinger Patentanwälte

(56) Entgegenhaltungen:
- WO-A1-2012/123634
- CA-A1- 2 453 689
- US-A1- 2003 106 306
- US-A1- 2007 220 865

## Beschreibung

Die Erfindung betrifft ein Verfahren zum Betreiben einer Verbrennungskraftmaschine mit den Merkmalen des Oberbegriffs von Anspruch 1. Weiters betrifft die Erfindung eine Abgasnachbehandlungseinrichtung mit den Merkmalen des Oberbegriffs des Anspruchs 11.

Zur Einhaltung der Emissionsauflagen werden Verbrennungskraftmaschinen häufig mit Systemen zur Abgasnachbehandlung ausgestattet. Zur Verringerung des Ausstoßes von unverbrannten Kohlenwasserstoffen (*total hydro carbon emissions, THC*) werden häufig Oxidationseinrichtungen in Form von Oxidationskatalysatoren eingesetzt. Da Kohlenwasserstoffe und das insbesondere für Gasmotoren relevante Methan nur oberhalb von etwa 550 °C oxidiert werden können, muss der Katalysator stromaufwärts des Turboladers eingerichtet sein. Stromabwärts des Turboladers hat das Abgas zuviel von seiner Enthalpie abgegeben, sodass keine zufriedenstellenden Umsatzraten mehr erreicht werden können.

Oxidationskatalysatoren weisen häufig eine Beschichtung mit Edelmetall - beispielsweise Palladium - auf, an der die Umsetzung der zu oxidierenden Spezies stattfindet.

Unglücklicherweise deaktivieren Edelmetallkatalysatoren rasch wenn sie im Abgasstrom von Verbrennungskraftmaschinen eingesetzt sind. Diese Deaktivierung wird durch eine Schwefelvergiftung des Edelmetalls hervorgerufen. Schwefelbeinhaltende Komponenten, die entweder aus dem Schmieröl oder aus dem Treibgas stammen können, reagieren mit dem Edelmetall, was zu einer massiven Abnahme der Umwandlungsraten von Methan führt. Bei Temperaturen von rund 700 °C und in der Gegenwart von Methan oder anderen Brenngasen ist die Reaktion am Beispiel von Palladium und Schwefel reversibel und der Katalysator kann regeneriert werden.

Da aber wegen der zu großen Bauteilbelastung am Turbolader die Abgastemperatur, die auf den Turbolader trifft auf rund 650 °C beschränkt ist, ist es nicht möglich, die Abgastemperatur auf 700 °C anzuheben, was für eine erfolgreiche thermische Regeneration des Oxidationskatalysators notwendig wäre.

Aus dem Stand der Technik sind mehrere Ansätze zur Regenerierung von Oxidationskatalysatoren bekannt. So zeigt etwa die EP 1 445 439 A1 eine Anordnung, in welcher dem Oxidationskatalysator ein reduzierendes Gas, beispielsweise Wasserstoff, zugeführt werden kann. Der Katalysator wird gemäß dieser Schrift also nicht thermisch, sondern chemisch regeneriert. Ein Bypass ist vorgesehen, über welchen während der Regenerierung des Oxidationskatalysators Abgas um den Oxidationskatalysator geleitet werden kann.

Die US 2003/106306 A1 zeigt eine Abgasreinigungsvorrichtung, bei der einem Abgas, kommend von einem Verbrennungsmotor, ein NOx-Absorbermittel beigemengt wird, um NOx zu absorbieren. Es wird eine Bypass-Leitung beschrieben, mittels der ein Teil der Abgase die Abgasreinigungsvorrichtung umströmen kann. Dabei wird angeführt, dass somit die Abgasmenge des Verbrennungsmotors bei der Reinigung nicht eingeschränkt werden muss, um eine optimale Reinigung zu erlangen.

Die WO 2012/123634 A1 zeigt eine Oxidationseinrichtung, welche mehrere Temperatur-sensoren aufweist und einen Bypass, welcher dem Abgas ermöglicht, die Oxidationseinrichtung zu umströmen. In dieser Schrift wird beschrieben, dass nach der Oxidationseinrichtung und vor der Turbine des Turboladers Wasser eingespritzt werden kann, um die Abgastemperatur zu reduzieren und den Turbolader zu schützen.

In der WO 2012/123636 ist vorgeschlagen, dass zur Regenerierung des Oxidationskatalysators Kraftstoff sequentiell in verschiedene Bereiche des Oxidationskatalysators eingebracht wird, um Temperaturspitzen im Oxidationskatalysator zu vermeiden. Wird schwefelreicher Kraftstoff eingesetzt, so können die Abgase über eine Bypassleitung um den Oxidationskatalysator herumgeführt werden. Als Maßnahme gegen Temperaturspitzen, die während der Regeneration im Oxidationskatalysator entstehen und den Turbolader schädigen können, wird vorgeschlagen, dass Wasser zwischen dem Oxidationskatalysator und der Turbine des Turboladers in den Abgastrakt eingespritzt wird.

Aufgabe der vorliegenden Erfindung ist es, ein Verfahren anzugeben, welches aufwendige Maßnahmen zur Vermeidung von Temperaturspitzen bei der Regenerierung einer Oxidationseinrichtung, die den Turbolader schädigen können, vermeidet.

Ebenso soll eine Abgasnachbehandlungseinrichtung angegeben werden, welche die Nachteile der aus dem Stand der Technik bekannten Lösungen vermeidet.

Gelöst wird diese Aufgabe durch ein Verfahren mit den Merkmalen des Anspruchs 1 und eine Abgasnachbehandlungseinrichtung mit den Merkmalen von Anspruch 11. Vorteilhafte Ausführungsformen sind in den Unteransprüchen definiert.

Dadurch, dass in Abhängigkeit einer ermittelten Abgastemperatur stromabwärts der Oxidationseinrichtung die Menge des über die Bypassleitung um die Oxidationseinrichtung vorbeigeführten Abgases gesteuert oder geregelt wird, kann also vermieden werden, dass die Abgastemperatur vor Turbolader für den Turbolader schädliche Werte annimmt.

Es hat sich nämlich in Versuchen der Anmelderin gezeigt, dass die Regeneration des Oxidationskatalysators sehr sensibel auf die Methankonzentration des dem Oxidationskatalysator zugeführten Abgases reagiert. So hat eine Erhöhung um nur 100 ppm der Methankonzentration (bzw. ein entsprechendes Methanäquivalent) eine Temperaturerhöhung von 2,5 °C des Oxidationskatalysators zur Folge. Zur Erzielung der für die Regeneration des Katalysators notwendigen Bedingungen ist eine Einstellung der Methankonzentration stromaufwärts der Oxidationseinrichtung im Bereich von 5000 bis 7000 ppm erforderlich.

Würde jedoch der gesamte Abgasmassenstrom, der aus dem Abgastrakt des Motors in die Oxidationseinrichtung strömt, diese Konzentration an Methan aufweisen, so würde zuviel chemische Energie umgesetzt werden und die Temperatur stromabwärts der Oxidationseinrichtung würde auf ein für die Turbine des Abgasturboladers unzuträgliches Maß steigen. Daher ist also vorgesehen, dass zwar die lokal in der Oxidationseinrichtung zur Regenerierung erforderliche Konzentration an Brenngas eingestellt wird, jedoch der Abgasmassenstrom in der Oxidationseinrichtung durch Umleiten eines Teils der Abgase um die Oxidationseinrichtung verringert wird.

Stromabwärts der Oxidationseinrichtung werden beide Massenströme, d. h. der durch die Regeneration der Oxidationseinrichtung sehr heiße Teilmassenstrom aus der Oxidationseinrichtung und der über den Bypass geleitete Teilmassenstrom, welcher ja die normale Abgastemperatur des Motors aufweist, wieder zusammengeführt und gemischt. Dadurch wird die Temperatur des auf die Turbine treffenden Abgasstromes gesenkt.

Die Abgastemperatur stromabwärts der Oxidationseinrichtung, in deren Abhängigkeit die Menge des über die Bypassleitung um die Oxidationseinrichtung vorbeigeführten Abgases gesteuert oder geregelt wird, kann über Messung und / oder Berechnung ermittelt werden.

Es wird durch das Verfahren also erreicht, dass nach Mischung der Teilmassenströme, d. h. des durch die Regeneration der Oxidationseinrichtung sehr heißen Teilmassenstroms aus der Oxidationseinrichtung und des über den Bypass geleiteten Teilmassenstroms, die Temperatur im Gesamtmassenstrom ein für den Turbolader schädliches Maß nicht überschreitet. Wird beispielsweise eine zu hohe Abgastemperatur stromabwärts der Oxidationseinrichtung festgestellt, so wird die Menge an über den Bypass geführtem Abgas erhöht und so die Temperatur im Gesamtmassenstrom gesenkt.

Ein zusätzlicher Vorteil des Verfahrens besteht darin, dass die für die Regeneration erforderliche Menge an Brenngas deutlich reduziert werden kann. Denn zur Regeneration der Oxidationseinrichtung ist die dort lokal vorliegende Konzentration an Brenngas maßgeblich und nicht eine absolute Menge an Brenngas.

Die Steuer- oder Regeleinrichtung führt in Abhängigkeit der Menge von vorbeigeführtem Abgas die Menge an zudosiertem Brenngas dementsprechend nach, sodass die zur Regenerierung erforderliche Konzentration an Brenngas in der Oxidationseinrichtung aufrechterhalten wird.

Auch kann, falls die Menge an Abgas, die durch den Katalysator strömt, bereits das untere Limit erreicht hat, die Konzentration an zudosiertem Methan in Abhängigkeit der ermittelten Temperatur verringert werden. Mit unterem Limit der durch die Oxidationseinrichtung strömenden Abgasmenge ist gemeint, dass, um eine gleichmäßige Anströmung der Oxidationseinrichtung zu gewährleisten, der Abgasmassenstrom durch die Oxidationseinrichtung nicht beliebig reduziert werden darf. Aus sicherheitstechnischen Gründen kann natürlich die Methanzufuhr unterbrochen werden, wenn der Volumenstrom durch die Oxidationseinrichtung bereits das untere Limit erreicht hat und trotzdem eine zu hohe Temperatur gemessen wird.

Bevorzugt kann vorgesehen sein, dass die Abgastemperatur stromabwärts der Oxidationseinrichtung durch einen Temperatursensor stromabwärts der Oxidationseinrichtung und stromaufwärts der Einmündung der Bypassleitung ermittelt wird. Gemäß diesem Ausführungsbeispiel ist also vorgesehen, dass die Abgastemperatur stromabwärts der Oxidationseinrichtung durch Messung ermittelt wird. Der Temperatursensor ist dazu in der Abgasleitung nach der Oxidationseinrichtung, jedoch vor der Einmündung der Bypassleitung angeordnet. Durch Steuerung / Regelung der Menge des über die Bypassleitung um die Oxidationseinrichtung vorbeigeführten Abgases wird nun das Verhältnis der Teilmassenströme (Abgasmenge durch Oxidationseinrichtung und Abgasmenge über Bypass) so eingestellt, dass die sich ergebende Mischungstemperatur der vereinigten Teilmassenströme ein für den Turbolader schädliches Maß nicht überschreitet.

In einer bevorzugten Ausführungsform kann vorgesehen sein, dass die Abgastemperatur stromabwärts der Oxidationseinrichtung durch einen Temperatursensor stromabwärts der Einmündung der Bypassleitung und vor der Einmündung in die Abgasturbine ermittelt wird. Hier wird also die Abgastemperatur vor Eintritt in die Abgasturbine durch Messung ermittelt und die Menge des über die Bypassleitung um die Oxidationseinrichtung vorbeigeführten Abgases in Abhängigkeit dieser Temperatur gesteuert oder geregelt.

Es kann auch vorgesehen sein, dass die Abgastemperatur stromabwärts der Oxidationseinrichtung durch Messung der Brenngaskonzentration vor und nach der Oxidationseinrichtung ermittelt wird. In diesem Ausführungsbeispiel wird die Brenngaskonzentration vor und nach der Oxidationseinrichtung durch Messung erfasst. Aus dem Unterschied der Konzentration vor und nach der Oxidationseinrichtung ergibt sich die Menge an umgesetztem Brenngas, woraus wiederum die Temperaturerhöhung über die Oxidationseinrichtung berechenbar ist. Daraus kann die Abgastemperatur stromabwärts der Oxidationseinrichtung ermittelt werden.

Erfindungsgemäß ist vorgesehen, dass zum Schutz eines stromabwärts der Oxidationseinrichtung angeordneten Turboladers die Menge des über die Bypassleitung um die Oxidationseinrichtung vorbeigeführten Abgases so gesteuert oder geregelt wird, dass eine kritische Temperatur des Turboladers nicht überschritten wird. Mit kritischer Temperatur des Turboladers ist eine Abgastemperatur gemeint, die, wenn sie auf den Turbolader trifft, diesen durch Überdrehzahl oder Überschreiten der zulässigen Bauteiltemperatur schädigt. Diese kritische Temperatur ist abhängig vom verbauten Turbolader und kann beispielsweise bei 650°C liegen.

Bevorzugt ist vorgesehen, dass etwa 30 % bis etwa 70 %, vorzugsweise etwa 40 % - etwa 50 %, des Abgases durch die Oxidationseinrichtung geleitet werden während der Rest des Abgases durch die Bypassleitung geleitet wird. Mit diesen Werten wurden gute Ergebnisse für die Regenerierung der Oxidationseinrichtung bei gleichzeitigem Schutz des Turboladers vor Temperaturspitzen erzielt.

Besonders bevorzugt kann vorgesehen sein, dass während einer Regenerierung der Oxidationseinrichtung eine Konzentration von mindestens 5000 bis 7000 ppm Methan oder eine entsprechende Menge an Methanäquivalent im in die Oxidationseinrichtung strömenden Gemisch eingestellt wird. Es hat sich bei einem NOx Grenzwert von 500 mg NOx pro Nm3 (Angaben als 5% O2-dry NOx) als geeignetes Maß herausgestellt, die Oxidationseinrichtung mit einer Konzentration von etwa 5000 bis 7000 ppm Methan bzw. dem entsprechenden Methanäquivalent zu regenerieren.

Bei Einhaltung schärferer Grenzwerte, beispielsweise 250 mg NOx / Nm3 hat es sich als vorteilhaft herausgestellt, dass während der Regenerierung eine Konzentration von mindestens 8000 bis 10000 ppm Methan oder eine entsprechende Menge an Methanäquivalent im in die Oxidationseinrichtung strömenden Gemisch eingestellt wird. Dies reflektiert die Tatsache, dass bei Motorenversionen, die im Rohabgas (also vor der Abgasnachbehandlung) eine sehr geringe Konzentration an NOx aufweisen, eine niedrigere Abgastemperatur vor der Oxidationseinrichtung herrscht als bei Motorenversionen, bei denen im Rohabgas eine höhere NOx-Konzentration zugelassen wird. Um die zur Regeneration erforderlichen Temperaturen in der Oxidationseinrichtung zu erreichen, muss also bei besonders mager betriebenen Motoren mit geringer NOx-Rohemission vor der Oxidationseinrichtung eine höhere Methankonzentration eingestellt werden.

Unter Methanäquivalent wird im Kontext der vorliegenden Anmeldung jene Menge an Brenngas verstanden, welches denselben energetischen Inhalt aufweist, wie eine vorgegebene Menge von Methan. Die in dieser Anmeldung für Methan angegebenen Konzentrationen müssen also bei Verwendung alternativer Brenngase entsprechend ihres Brennwertes korrigiert werden. So liegt der Brennwert von Methan bei 39,8MJ/Nm³; der Brennwert von Ethan 70,3MJ/Nm³. Somit entsprechen 2831 ppm Ethan dem Energieinhalt von 5000 ppm Methan.

Die Konzentrationsangaben in ppm beziehen sich auf die Stoffmenge bzw. das Volumen (bei idealen Gasen äquivalent). Im Falle des genannten Ethans wären also nur etwa die halben Konzentrationen erforderlich. Brennwerte von Brenngasen sind in einschlägigen Tabellenwerken einsehbar.

Es kann vorgesehen sein, dass die Brenngaszufuhr während der Regenerierung der Oxidationseinrichtung intermittierend unterbrochen wird, mittels eines Temperatursensors die Abgastemperatur stromabwärts, mittels eines weiteren Temperatursensors die Abgastemperatur stromaufwärts der Oxidationseinrichtung erfasst und anhand der Temperaturdifferenz der Grad der Regenerierung festgestellt wird. Mit dieser Ausführungsform kann rasch festgestellt werden, ob die Regenerierung vollständig erfolgt ist. Anhand der sich einstellenden Temperaturdifferenz ist feststellbar, ob die Oxidationseinrichtung wieder die gewünschte Umsatzrate erreicht. Denn an die Umsatzrate (d.h. das Maß an Oxidation unverbrannter Kohlenwasserstoffe) ist eine bestimmte Wärmeentwicklung gebunden. Werden die im Abgas vorhandenen unverbrannten Kohlenwasserstoffe nur unzureichend umgesetzt, bleibt die Temperatur nach der Oxidationseinrichtung unter einem erwarteten Wert. Dies ist ein Hinweis darauf, dass die Regenerierung nicht vollständig abgeschlossen wurde. Während der Unterbrechung der Brenngaszufuhr wird das Ventil in der Bypassleitung geschlossen und das Ventil stromabwärts der Oxidationseinrichtung komplett geöffnet, sodass der gesamte Abgasmassenstrom durch die Oxidationseinrichtung strömt. Damit wird erreicht, dass sich in der Oxidationseinrichtung Strömungsverhältnisse wie im regulären Betrieb einstellen und somit die Messung repräsentativ ist.

Gemäß einem weiteren bevorzugten Ausführungsbeispiel ist vorgesehen, dass mittels eines Temperatursensors die Abgastemperatur stromabwärts, mittels eines weiteren Temperatursensors die Abgastemperatur stromaufwärts der Oxidationseinrichtung erfasst und anhand der ermittelten Temperaturdifferenz der Zeitpunkt für die nächste Regenerierung festgelegt wird.

Der oben erläuterte Zusammenhang kann also genutzt werden, um das Intervall zwischen zwei Regenerierungen festzulegen. Es wird also durch die nach Abschluss einer Regenerierung sich einstellende stationäre Temperatur am Ausgang der Oxidationseinrichtung erkannt, in welchem Ausmaß die Oxidationseinrichtung regeneriert wurde und damit der Zeitpunkt für die nächste Regenerierung bestimmt. Eingehen können dabei natürlich auch weitere von der Motorsteuerung erfasste Größen wie Betriebsdauer vor der Regenerierung, Verlauf der Temperatur über die Betriebsdauer, Betriebszustände, Kraftstoffqualität und dergleichen.

Bevorzugt kann vorgesehen sein, dass mittels des einen Temperatursensors stromabwärts der Oxidationseinrichtung die Abgastemperatur stromabwärts, mittels des weiteren Temperatursensors die Abgastemperatur stromaufwärts der Oxidationseinrichtung erfasst wird, und der Zeitpunkt für die nächste Regenerierung dadurch festgelegt wird, dass einerseits aus der Temperaturdifferenz zwischen stromabwärts und stromaufwärts der Oxidationseinrichtung die Umsatzrate der Oxidationseinrichtung bestimmt wird,
und andererseits aus der durch stromaufwärts der Oxidationseinrichtung gelegenen Temperatursensor erfassten Temperatur stromaufwärts der Oxidationseinrichtung ein Erwartungswert für den zu erwartenden Temperaturanstieg über der Oxidationseinrichtung bestimmt wird.

Noch präziser als über die Temperaturdifferenz alleine kann über die zusätzliche Berücksichtigung der Temperatur stromaufwärts der Oxidationseinrichtung in Kombination mit der Temperaturdifferenz auf den Zustand der Oxidationseinrichtung geschlossen werden: Der Anstieg von Motorrohemissionen korreliert mit einer Abnahme der Abgastemperatur (erfasst durch die Temperatur stromaufwärts der Oxidationseinrichtung). Durch Messung dieser Temperatur kann also mit einem entsprechenden Kennfeld die Rohemission an Methan und damit der erwartete Temperaturanstieg über der Oxidationseinrichtung ermittelt werden. Dieser Erwartungswert kann dann mit der tatsächlich gemessenen Differenz zwischen den Messpunkten stromabwärts und stromaufwärts der Oxidationseinrichtung verglichen werden und so auf den Aktivitätszustand des Katalysators geschlossen werden.

Die erfindungsgemäße Abgasnachbehandlungseinrichtung ist dadurch gekennzeichnet, dass die Steuer- oder Regeleinrichtung in Abhängigkeit einer ermittelten Abgastemperatur stromabwärts der Oxidationseinrichtung dazu eingerichtet ist, die Menge des über die Bypassleitung um die Oxidationseinrichtung vorbeigeführten Abgases zu steuern oder zu regeln.

Bevorzugt ist vorgesehen, dass die Abgastemperatur stromabwärts der Oxidationseinrichtung durch einen stromabwärts der Oxidationseinrichtung und stromaufwärts der Einmündung der Bypassleitung angeordneten Temperatursensor ermittelbar ist. Hier ist also ein zwischen der Oxidationseinrichtung und der Einmündung der Bypassleitung angeordneter Temperatursensor zur Messung der Abgastemperatur stromabwärts der Oxidationseinrichtung vorgesehen.

Auch kann vorgesehen sein, dass die Abgastemperatur stromabwärts der Oxidationseinrichtung durch einen stromabwärts der Einmündung der Bypassleitung und vor der Einmündung in die Abgasturbine angeordneten Temperatursensor ermittelbar ist. In diesem Beispiel ist die Abgastemperatur vor Eintritt in den Turbolader durch Messung ermittelbar.

In einer weiteren bevorzugten Ausführungsform ist vorgesehen, dass die Abgastemperatur stromabwärts der Oxidationseinrichtung mittels einer Messeinrichtung zur Messung der Brenngaskonzentration durch Messung der Brenngaskonzentration vor und nach der Oxidationseinrichtung ermittelbar ist. Gemäß diesem Beispiel ist eine Messeinrichtung vorgesehen, welche die Brenngaskonzentration vor und nach der Oxidationseinrichtung messen kann. Aus den Messwerten dieser Messeinrichtung kann auf die Abgastemperatur stromabwärts der Oxidationseinrichtung geschlossen werden.

Bevorzugt kann vorgesehen sein, dass die Gasquelle die Treibgasleitung ist. Das zur Regenerierung erforderliche Brenngas wird in diesem Fall aus der Treibgasleitung bezogen.

Es kann auch vorgesehen sein, dass die Gasquelle eine von der Treibgasleitung separate Gasversorgung, besonders bevorzugt eine Gasflasche, ist. Das bedeutet, dass das zur Regenerierung erforderliche Brenngas aus einer separaten Gasquelle bezogen wird. Dies ist mit verringerten Investitionskosten verbunden als eine Anbindung an die Gasversorgungsleitung. Es ist natürlich auch möglich, die eben genannten Gasquellen zur Bereitstellung von Brenngas zur Regenerierung zu kombinieren.

Im Folgenden wird die Erfindung durch Figuren näher erläutert. Dabei zeigt:
- Fig. 1: Ein Schema der Abgasnachbehandlungseinrichtung
- Fig. 2: Ein Schema der Abgasnachbehandlungseinrichtung nach Figur 1 mit zusätzlicher Messeinrichtung

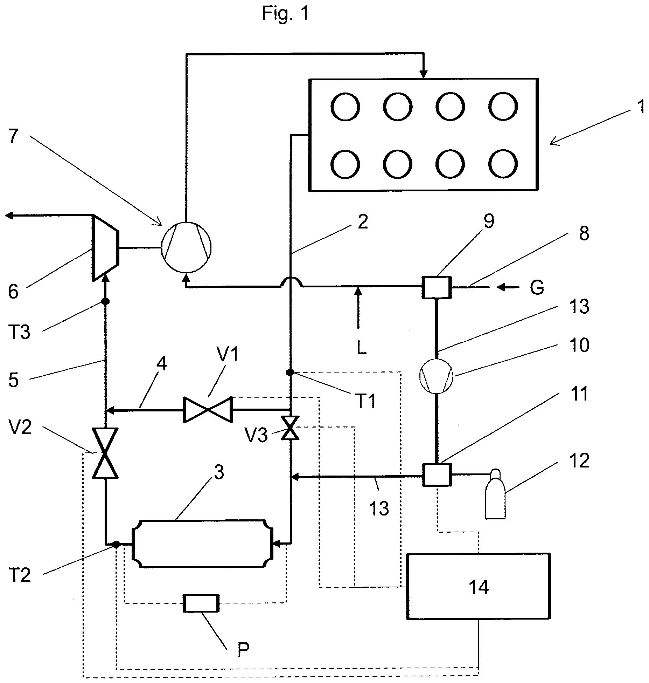

Figur 1 zeigt eine Verbrennungskraftmaschine 1 mit der Abgassammelleitung 2. Die Abgase strömen über die Abgassammelleitung 2 zur Oxidationseinrichtung 3.

Die Abgase strömen weiter über Abgasleitung 5 zur Abgasturbine 6 des Turboladers. Die Abgase treiben die Abgasturbine 6 an, welche über eine Welle mit einem Verdichter 7 verbunden ist. Der Verdichter 7 komprimiert Gemisch (Brenngas G und Luft L) bzw. Luft L, welches bzw. welche mit erhöhtem Druck der Verbrennungskraftmaschine 1 zugeführt wird. Eine Bypassleitung 4, die über ein Ventil V1 regelbar ist, verläuft strömungstechnisch parallel zur Oxidationseinrichtung 3.

Von der Treibgasversorgung 8 des Motors ist eine Abzweigung 9 vorgesehen, über welche Brenngas G über die Brenngaszuführleitung 13 stromaufwärts der Oxidationsvorrichtung 3 zuführbar ist. Die Brenngaszuführleitung 13 mündet stromaufwärts der Oxidationsvorrichtung 3 und stromabwärts der Abzweigung der Bypassleitung 4 in die Abgassammelleitung 2.

Die Brenngaszuführleitung 13 kann mit einem zusätzlichen Kompressor 10 ausgestattet sein, wenn die Gasversorgung des Motors ein Druckniveau aufweist, welches niedriger als das Druckniveau in der Abgassammelleitung 2 der Verbrennungskraftmaschine 1 ist.

Weiters ist eine Dosiereinrichtung 11 gezeigt, durch welche die Menge an der Oxidationseinrichtung 3 zugeführtem Brenngas von der Steuer- oder Regeleinrichtung 14 steuerbar oder regelbar ist.

Über ein durch die Steuer- oder Regeleinrichtung 14 ansteuerbares Ventil V1 kann die Menge an Abgas, welche über den Bypass 4 strömt, festgelegt werden. Ein vollständig geschlossenes Ventil V1 bedeutet zum Beispiel, dass kein Abgas über den Bypass 4 strömt.
Die Steuer- oder Regeleinrichtung 14 hält die Konzentration an Brenngas in dem der Oxidationseinrichtung 3 zugeführten Gemisch von Abgas und Brenngas konstant auf einen festgelegten Wertebereich. Die Steuer- oder Regeleinrichtung 14 kann also bei Änderungen des Massenstromes, der durch die Oxidationseinrichtung 3 geleitet wird, die Menge an Brenngas entsprechend anpassen.

Stromabwärts der Oxidationseinrichtung 3 ist optional ein weiteres regelbares Ventil V2 vorgesehen, das zwischen der Oxidationseinrichtung 3 und vor dem Eintritt der Bypassleitung 4 in die Abgasleitung 5 angeordnet ist.

Ein weiteres optionales Ventil V3 ist zwischen der Abzweigung der Bypassleitung 4 und der Einmündung der Brenngaszuführleitung 13 angeordnet.

Im einfachsten Fall wird also die Durchflussmenge an Abgas durch die Bypassleitung 4 nur über ein Ventil, nämlich Ventil V1, gesteuert oder geregelt. Eine vollständige Umleitung des gesamten Abgasstromes durch die Bypassleitung 4 ist dann selbst bei völlig geöffneten Ventil V1 freilich nicht möglich, da der Strömungspfad durch die Oxidationseinrichtung 3 ja weiterhin offen bleibt. In der Praxis ergibt sich aber durch den höheren Strömungswiderstand durch die Oxidationseinrichtung 3 als über die Bypassleitung 4 bei geöffneter Position von Ventil V1 bereits eine meist ausreichende Umleitung der Abgase durch die Bypassleitung 4.

In der Variante mit einem zusätzlichen Ventil V2 stromabwärts der Oxidationseinrichtung 3 wird es zusätzlich möglich, die Durchströmung der Oxidationseinrichtung 3 zu drosseln oder ganz abzusperren. Durch diese Maßnahme kann die Regeneration in der Oxidationseinrichtung 3 vorteilhaft moderiert werden. In dieser Variante liegt immer noch der Staudruck der Abgase in der Abgassammelleitung 2 an der Oxidationseinrichtung 3 an.

Erst bei Vorsehen des dritten Ventils V3 stromaufwärts der Oxidationseinrichtung 3 zwischen der Abzweigung der Bypassleitung 4 und der Einmündung der Brenngaszuführleitung 13 ist es möglich, die Oxidationseinrichtung 3 völlig abzusperren. In der Variante mit Vorhandensein des Ventils V3 kann die Moderierung der Oxidationseinrichtung 3 besonders günstig erfolgen, denn durch Ventil V3 kann die Abgasmenge in die Oxidationseinrichtung 3 gedrosselt und die Dosierung an Brenngas davon unabhängig aufrechterhalten werden.

Technisch realisiert werden können alle Varianten, also Ventil V1 alleine, Ventil V1 mit Ventil V2, Ventil V1 mit Ventil V3, Ventil V1 mit Ventil V2 und Ventil V3.

Das zur Regeneration der Oxidationseinrichtung 3 erforderliche Brenngas, beispielsweise Methan, kann von der Treibgasversorgung 8 der Verbrennungskraftmaschine 1 und / oder von Gasflaschen 12 bezogen werden.

Abhängig von den erforderlichen Regenerationsintervallen, welche wiederum von der Gasqualität und vom Ölverbrauch abhängen, kann es ausreichend sein, dass die Gasversorgung zur Regeneration der Oxidationseinrichtung 3 ausschließlich über Gasflaschen 12 erfolgt. In diesem Fall sind die Investitionskosten gegenüber einer Anbindung an die Treibgasversorgung 8 reduziert.

In Abhängigkeit einer ermittelten Abgastemperatur stromabwärts der Oxidationseinrichtung 3 wird die Menge des über die Bypassleitung 4 um die Oxidationseinrichtung 3 vorbeigeführten Abgases gesteuert oder geregelt.

Wie weiter oben in der Beschreibung erläutert, kann die Ermittlung einer Abgastemperatur stromabwärts der Oxidationseinrichtung 3 beispielsweise durch direkte Messung der Abgastemperatur, etwa über Temperatursensor T3 am Eingang der Abgasturbine 6 erfolgen. Die Menge des über die Bypassleitung 4 um die Oxidationseinrichtung 3 vorbeigeführten Abgases wird in Abhängigkeit dieser durch Temperatursensor T3 festgestellten Temperatur so gesteuert oder geregelt, dass die sich ergebende Mischungstemperatur der vereinigten Teilmassenströme aus der Bypassleitung 4 und der Oxidationseinrichtung 3 ein für den Turbolader schädliches Maß nicht überschreitet.

Die Ermittlung einer Abgastemperatur stromabwärts der Oxidationseinrichtung 3 kann auch durch Messung der Temperatur durch Temperatursensor T2 geschehen. Der Temperatursensor T2 ist in der Abgasleitung 5 nach der Oxidationseinrichtung 3, jedoch vor der Einmündung der Bypassleitung 4 angeordnet. Durch Steuerung / Regelung der Menge des über die Bypassleitung 4 um die Oxidationseinrichtung 3 vorbeigeführten Abgases wird nun das Verhältnis der Teilmassenströme (Abgasmenge durch Oxidationseinrichtung 3 und Abgasmenge über Bypassleitung 4) so eingestellt, dass die sich ergebende Mischungstemperatur der vereinigten Teilmassenströme ein für die Abgasturbine 6 schädliches Maß nicht überschreitet. Aus Kenntnis der Ventilposition von Ventil V1 in der Bypassleitung 4 ist die Menge an durch die Bypassleitung 4 strömenden Abgases bekannt und es kann so auf Mischungstemperatur der vereinigten Teilmassenströme aus der Oxidationseinrichtung 3 und der Bypassleitung 4 geschlossen werden.

Durch die Signale des Temperatursensors T2 am Ausgang der Oxidationseinrichtung 3 kann man auch auf den Verlauf der Regeneration schließen und es sind Temperaturspitzen durch die Regeneration erkennbar. Der Temperatursensor T2 am Ausgang der Oxidationseinrichtung 3 ist auch ein zusätzliches Sicherheitselement. So kann die Eindüsung von Brenngas unterbrochen werden, wenn ein vordefiniertes Temperaturlimit überschritten wird. Dieses Temperaturlimit ergibt sich aus der maximalen für die Abgasturbine 6 zulässigen Temperatur und einem Sicherheitsfaktor bzw. aus der maximalen für die Oxidationseinrichtung 3 zulässigen Temperatur.

Die Abgastemperatur stromabwärts der Oxidationseinrichtung 3 kann also an unterschiedlichen Positionen der Abgasleitung 5 ermittelt werden. Dem Fachmann ist es geläufig, daraus die Abgastemperatur bei Eintritt in die Abgasturbine 6 zu berechnen, da der Temperaturabbau über die Erstreckung einer Abgasleitung 5 bekannt ist.

Die Steuer- oder Regeleinrichtung 14 ist über Signalleitungen (strichliert gezeichnet) mit den Sensoren (Temperatursensoren T1 bis T3, Differenzdruckmesseinrichtung P) bzw. Aktoren (Ventile V1 bis V3, Dosiereinrichtung 11) verbunden und empfängt über die Signalleitungen Signale von den Sensoren bzw. sendet über die Signalleitungen Befehle an die Aktoren. Die Steuer- oder Regeleinrichtung 14 kann durch die Motorsteuerung oder als zusätzliche Steuer- oder Regeleinrichtung realisiert sein. In beiden Fällen kann sie Motorsignale empfangen und verarbeiten. Die Signalverbindungen zur Verbrennungskraftmaschine 1 sind nicht gezeigt.

Stromaufwärts der Oxidationseinrichtung 3 kann ein weiterer Temperatursensor T1 vorgesehen sein, der die Abgastemperatur des Rohabgases erfasst.
Da die Motorrohemissionen mit der Abgastemperatur (erfasst durch die Temperatur an T1) korrelieren, kann durch Messung dieser Temperatur mit einem entsprechenden Kennfeld die Rohemission an Methan und damit der erwartete Temperaturanstieg über der Oxidationseinrichtung ermittelt werden.

Die Temperatursensoren T1 bis T3 stehen in Signalverbindung mit der Steuer- oder Regeleinrichtung 14; die Verbindungen sind der Übersichtlichkeit halber nicht alle gezeigt.

Ebenfalls gezeigt, jedoch nur optional vorhanden, ist die Differenzdruckmesseinrichtung P. Diese erfasst den über die Oxidationseinrichtung 3 aufgebauten Abgasgegendruck und gibt Hinweise auf die Strömungsverhältnisse in der Oxidationseinrichtung 3. Die Differenzdruckmesseinrichtung P steht in Signalverbindung mit der Steuer- oder Regeleinrichtung 14; die Verbindungen sind der Übersichtlichkeit halber nicht gezeigt.

Das Brenngas, welches stromaufwärts der Oxidationseinrichtung eingedüst wird, wird mit dem Abgas gemischt, damit die Oxidationseinrichtung 3 von einem Gasgemisch mit gleichmäßiger Konzentration über den gesamten Querschnitt angeströmt wird. Dies ist deswegen von besonderer Bedeutung, da lokale Spitzen von Brenngaskonzentrationen lokal eine übermäßige Wärmeentwicklung an der Oxidationseinrichtung 3 bewirken und diese thermisch schädigen können. Zum anderen würden Bereiche der Oxidationseinrichtung 3, an denen die Brenngaskonzentration geringer als die zur Regeneration notwendige Konzentration ist, nur unzureichend regeneriert. Die Menge von Brenngas, welches in das Abgas eingedüst wird, wird von der Steuer- oder Regeleinrichtung 14 über die Dosiereinrichtung 11 gesteuert oder geregelt.

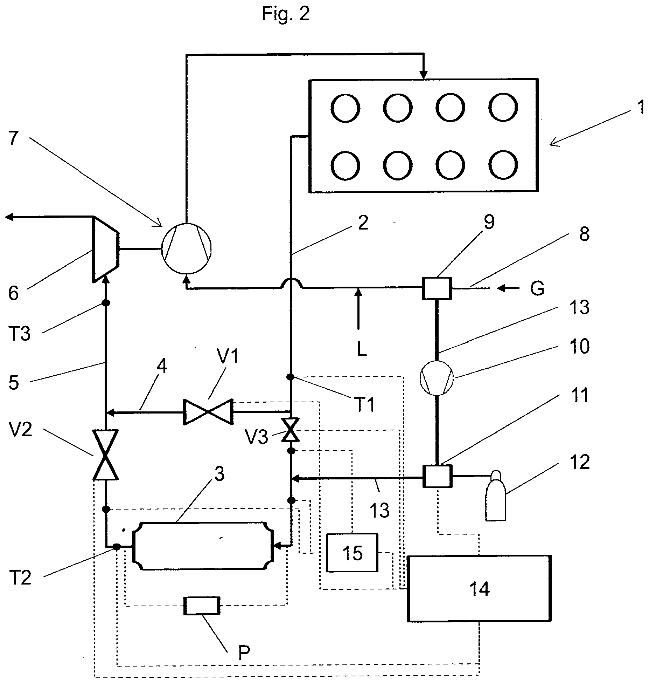

Figur 2 zeigt ein Schema entsprechend Figur 1, wobei zusätzlich eine Messeinrichtung zur Messung der Brenngaskonzentration 15 stromaufwärts der Oxidationseinrichtung 3 vorgesehen ist.

Durch die Konzentrationsmesseinrichtung 15 wird die Konzentration an Brenngas vor und nach der Oxidationseinrichtung 3 und optional auch zusätzlich vor der Brenngaszufuhrposition erfasst. Durch die Konzentrationsmesseinrichtung 15 kann die Umsatzrate des Katalysators bestimmt werden, um die Regenerierungsintervalle festzulegen. Denn aus der Differenz der Konzentration an Brenngas vor und nach der Oxidationseinrichtung 3 ergibt sich die Menge an umgesetztem Brenngas. Daraus kann, wie weiter oben erläutert, auch die Temperaturerhöhung über die Oxidationseinrichtung 3 berechnet werden.

Somit kann auch über diese Variante eine Abgastemperatur stromabwärts der Oxidationseinrichtung 3 ermittelt werden, in deren Abhängigkeit die Menge des über die Bypassleitung 4 um die Oxidationseinrichtung 3 vorbeigeführten Abgases so gesteuert oder geregelt wird, dass die Abgastemperatur vor Turbolader für den Turbolader keine schädlichen Werte annimmt.

Mit Hilfe der Kohlenwasserstoffkonzentration vor und nach dem Eindüsungspunkt und dem Abgasmassenstrom, der aus der Motorsteuerung bekannt ist, kann überprüft werden, ob tatsächlich der gewünschte Abgasstrom durch den Katalysator strömt (Kontrolle der Ventilfunktion) bzw. ob die Dosiereinrichtung die gewünschte Menge an Methan dosiert (Kontrolle der Dosiereinrichtungsfunktion).

Um die erforderliche Brenngaskonzentration stromaufwärts der Oxidationseinrichtung 3 genau einzustellen, wird über die Messeinrichtung 15 die Kohlenwasserstoffkonzentration stromaufwärts des Einspritzpunktes erfasst.

Ein geeignetes Messverfahren ist beispielsweise ein Flammenionisationsdetektor (*flame ionisation detector, FID*). Diese Maßnahme ist allerdings nicht unbedingt erforderlich, denn im Betrieb schwankt die Kohlenwasserstoffkonzentration im Abgas nur in geringem Maße bzw. ist mit hinreichender Genauigkeit über ein in der Steuer- oder Regeleinrichtung 14 hinterlegtes Kennfeld mit der Abgastemperatur korrelierbar. D. h., selbst wenn die Brenngaskonzentration stromaufwärts des Katalysators während der Regeneration beispielsweise 5500 ppm anstelle der gewünschten 5000 ppm betragen sollte, nehmen weder die Oxidationseinrichtung 3 noch der Turbolader 6 Schaden. Eine andere Aufgabe der Messeinrichtung zur Messung der Brenngaskonzentration 15 ist es zu prüfen, ob das eingedüste Brenngas gleichmäßig über die Querschnittsfläche der Oxidationseinrichtung 3 verteilt ist. Zu diesem Zweck können Konzentrationsmesssonden an verschiedenen radialen Positionen der Oxidationseinrichtung 3 vorgesehen sein (nicht im Detail gezeigt).

Die für Figur 1 beschriebenen Varianten und Details sind natürlich auch für das Ausführungsbeispiel nach Figur 2 gültig. Die Ermittlung einer Abgastemperatur stromabwärts der Oxidationseinrichtung 3 kann gemäß den erläuterten Varianten oder in Kombination derer erfolgen.

### Liste der verwendeten Bezugszeichen:

- 1: Verbrennungskraftmaschine
- 2: Abgassammelleitung
- 3: Oxidationseinrichtung
- 4: Bypassleitung
- 5: Abgasleitung
- 6: Abgasturbine
- 7: Verdichter
- 8: Treibgasversorgung
- 9: Abzweigung
- 10: Kompressor
- 11: Dosiereinrichtung
- 12: Gasflasche
- 13: Brenngaszuführleitung
- 14: Steuer- oder Regeleinrichtung
- 15: Messeinrichtung zur Messung der Brenngaskonzentration
- L: Verbrennungsluft
- G: Brenngas
- P: Differenzdruckmesseinrichtung
- V1, V2, V3: Ventile
- T1, T2, T3: Temperatursensoren

## Patentansprüche

1. Verfahren zum Regenerieren einer Oxidationseinrichtung (3) einer Verbrennungskraftmaschine (1), insbesondere einer stationären Verbrennungskraftmaschine, wobei die Oxidationseinrichtung (3) der Verbrennungskraftmaschine (1) nachgeschaltet ist und wobei der Oxidationseinrichtung (3) zur Erhöhung einer Temperatur in der Oxidationseinrichtung (3) ein Gemisch aus Brenngas und Abgas zuführbar ist und wobei über eine Bypassleitung (4) Abgas um die Oxidationseinrichtung (3) vorbeiführbar ist, **dadurch gekennzeichnet, dass** in Abhängigkeit einer ermittelten Abgastemperatur stromabwärts der Oxidationseinrichtung (3) die Menge des über die Bypassleitung (4) um die Oxidationseinrichtung (3) vorbeigeführten Abgases gesteuert oder geregelt wird, sodass eine kritische Temperatur der Abgasturbine (6) nicht überschritten wird um eine stromabwärts der Oxidationseinrichtung (3) angeordnete Abgasturbine (6) zu schützen.

2. Verfahren nach Anspruch 1, **dadurch gekennzeichnet, dass** die Abgastemperatur stromabwärts der Oxidationseinrichtung (3) durch einen stromabwärts der Oxidationseinrichtung (3) und stromaufwärts der Einmündung der Bypassleitung (4) angeordneten Temperatursensor (T2) ermittelt wird.

3. Verfahren nach Anspruch 1, **dadurch gekennzeichnet, dass** die Abgastemperatur stromabwärts der Oxidationseinrichtung (3) durch einen stromabwärts der Einmündung der Bypassleitung (4) und vor der Einmündung in die Abgasturbine (6) angeordneten Temperatursensor (T3) ermittelt wird.

4. Verfahren nach Anspruch 1, **dadurch gekennzeichnet, dass** die Abgastemperatur stromabwärts der Oxidationseinrichtung (3) durch Messung der Brenngaskonzentration vor und nach der Oxidationseinrichtung (3) ermittelt wird.

5. Verfahren nach wenigstens einem der vorangegangenen Ansprüche, **dadurch gekennzeichnet, dass** etwa 30 % bis etwa 70 %, vorzugsweise etwa 40 % - etwa 50 %, des Abgases durch die Oxidationseinrichtung (3) geleitet werden während der Rest des Abgases durch die Bypassleitung (4) geleitet wird.

6. Verfahren nach wenigstens einem der vorangegangenen Ansprüche, **dadurch gekennzeichnet, dass** während der Regenerierung eine Konzentration von mindestens 5000 bis 7000 ppm Methan oder eine entsprechende Menge an Methanäquivalent im in die Oxidationseinrichtung (3) strömenden Gemisch eingestellt wird.

7. Verfahren nach wenigstens einem der Ansprüche 1 bis 5, **dadurch gekennzeichnet, dass** während der Regenerierung eine Konzentration von mindestens 8000 bis 10000 ppm Methan oder eine entsprechende Menge an Methanäquivalent im in die Oxidationseinrichtung (3) strömenden Gemisch eingestellt wird.

8. Verfahren nach wenigstens einem der vorangegangenen Ansprüche, **dadurch gekennzeichnet, dass** die Brenngaszufuhr während der Regenerierung der Oxidationseinrichtung (3) intermittierend unterbrochen wird, mittels des Temperatursensors (T2) die Abgastemperatur stromabwärts, mittels des Temperatursensors (T1) die Abgastemperatur stromaufwärts der Oxidationseinrichtung erfasst und anhand der Temperaturdifferenz zwischen (T1) und (T2) der Grad der Regenerierung festgestellt wird.

9. Verfahren nach wenigstens einem der vorangegangenen Ansprüche, **dadurch gekennzeichnet, dass** mittels des Temperatursensors (T2) die Abgastemperatur stromabwärts, mittels des Temperatursensors (T1) die Abgastemperatur stromaufwärts der Oxidationseinrichtung erfasst und anhand der ermittelten Temperaturdifferenz der Zeitpunkt für die nächste Regenerierung festgelegt wird.

10. Verfahren nach wenigstens einem der Ansprüche 6 bis 7, **dadurch gekennzeichnet, dass** mittels des Temperatursensors (T2) die Abgastemperatur stromabwärts, mittels des Temperatursensors (T1) die Abgastemperatur stromaufwärts der Oxidationseinrichtung erfasst wird,
und der Zeitpunkt für die nächste Regenerierung dadurch festgelegt wird, dass einerseits aus der Temperaturdifferenz zwischen (T1) und (T2) die Umsatzrate der Oxidationseinrichtung bestimmt wird,
und andererseits aus der durch stromaufwärts der Oxidationseinrichtung gelegenen Temperatursensor (T1) erfassten Temperatur stromaufwärts der Oxidationseinrichtung ein Erwartungswert für den zu erwartenden Temperaturanstieg über der Oxidationseinrichtung bestimmt wird.

11. Abgasnachbehandlungseinrichtung für eine Verbrennungskraftmaschine (1), insbesondere einer stationären Verbrennungskraftmaschine, mit einer Steuer- oder Regeleinrichtung (14), einer Abgasturbine (6) und einer stromaufwärts der Abgasturbine (6) angeordneten Oxidationseinrichtung (3) für Abgase, wobei über eine Bypassleitung (4) Abgase von der Verbrennungskraftmaschine (1) an der Oxidationseinrichtung (3) vorbeiführbar sind, und wobei in der Abgassammelleitung (2) stromaufwärts der Oxidationseinrichtung (3) eine Verbindung zu einer Gasquelle vorgesehen ist und der Oxidationseinrichtung (3) ein Gemisch aus von einer Gasquelle stammendem Brenngas (G) und Abgas zuführbar ist, **dadurch gekennzeichnet, dass** die Steuer- oder Regeleinrichtung (14) dazu eingerichtet ist, in Abhängigkeit einer ermittelten Abgastemperatur stromabwärts der Oxidationseinrichtung (3) die Menge des über die Bypassleitung (4) um die Oxidationseinrichtung (3) vorbeigeführten Abgases zu steuern oder zu regeln, sodass eine kritische Temperatur der Abgasturbine (6) nicht überschritten wird um eine stromabwärts der Oxidationseinrichtung (3) angeordnete Abgasturbine (6) zu schützen.

12. Abgasnachbehandlungseinrichtung nach Anspruch 11, **dadurch gekennzeichnet, dass** die Abgastemperatur stromabwärts der Oxidationseinrichtung (3) durch einen durch einen stromabwärts der Oxidationseinrichtung (3) und stromaufwärts der Einmündung der Bypassleitung (4) angeordneten Temperatursensor (T2) ermittelbar ist.

13. Abgasnachbehandlungseinrichtung nach Anspruch 11, **dadurch gekennzeichnet, dass** die Abgastemperatur stromabwärts der Oxidationseinrichtung (3) durch einen stromabwärts der Einmündung der Bypassleitung (4) und vor der Einmündung in die Abgasturbine (6) angeordneten Temperatursensor (T3) ermittelbar ist.

14. Abgasnachbehandlungseinrichtung nach Anspruch 11, **dadurch gekennzeichnet, dass** die Abgastemperatur stromabwärts der Oxidationseinrichtung (3) mittels der Messeinrichtung zur Messung der Brenngaskonzentration (15) durch Messung der Brenngaskonzentration vor und nach der Oxidationseinrichtung (3) ermittelbar ist.

15. Abgasnachbehandlungseinrichtung nach wenigstens einem der Ansprüche 11 bis 14, **dadurch gekennzeichnet, dass** die Gasquelle entweder die Treibgasleitung (8) oder eine von der Treibgasleitung (8) separate Gasversorgung, besonders bevorzugt eine Gasflasche (12), ist.

## Claims

1. A method of regenerating an oxidation device (3) of an internal combustion engine (1), in particular a stationary internal combustion engine, wherein the oxidation device (3) is connected downstream of the internal combustion engine (1) and wherein a mixture of combustion gas and exhaust gas can be fed to the oxidation device (3) to increase a temperature in the oxidation device (3) and wherein exhaust gas can be passed around the oxidation device (3) by way of a bypass conduit (4), wherein the amount of exhaust gas passed around the oxidation device (3) by way of the bypass conduit (4) is controlled in open-loop or closed-loop control mode in dependence on an ascertained exhaust gas temperature downstream of the oxidation device (3), **characterized in that** a critical temperature of the exhaust gas turbine (6) is not exceeded to protect the exhaust gas turbine (6) arranged downstream of the oxidation device (3).

2. A method as set forth in claim 1 **characterised in that** the exhaust gas temperature downstream of the oxidation device (3) is ascertained by a temperature sensor (T2) arranged downstream of the oxidation device (3) and upstream of the entry mouth of the bypass conduit (4).

3. A method as set forth in claim 1 **characterised in that** the exhaust gas temperature downstream of the oxidation device (3) is ascertained by a temperature sensor (T3) arranged downstream of the entry mouth of the bypass conduit (4) and before the entry mouth into the exhaust gas turbine (6).

4. A method as set forth in claim 1 **characterised in that** the exhaust gas temperature downstream of the oxidation device (3) is ascertained by measurement of the combustion gas concentration before and after the oxidation device (3).

5. A method as set forth in at least one of the preceding claims **characterised in that** between about 30% and about 70%, preferably between about 40% and about 50%, of the exhaust gas is passed through the oxidation device (3) while the remainder of the exhaust gas is passed through the bypass conduit (4).

6. A method as set forth in at least one of the preceding claims **characterised in that** during regeneration a concentration of between at least 5000 and 7000 ppm of methane or a corresponding amount of methane equivalent is set in the mixture flowing into the oxidation device (3).

7. A method as set forth in at least one of claims 1 to 5 **characterised in that** during regeneration a concentration of between at least 8000 and 10000 ppm of methane or a corresponding amount of methane equivalent is set in the mixture flowing into the oxidation device (3).

8. A method as set forth in at least one of the preceding claims **characterised in that** the combustion gas feed is intermittently interrupted during regeneration of the oxidation device (3), the exhaust gas temperature is detected downstream of the oxidation device by means of the temperature sensor (T2), the exhaust gas temperature upstream of the oxidation device is detected by means of the temperature sensor (T1) and the degree of regeneration is established on the basis of the temperature difference between (T1) and (T2).

9. A method as set forth in at least one of the preceding claims **characterised in that** the exhaust gas temperature is detected downstream of the oxidation device by means of the temperature sensor (T2), the exhaust gas temperature is detected upstream of the oxidation device by means of the temperature sensor (T1) and the moment in time for the next regeneration operation is established on the basis of the ascertained temperature difference.

10. A method as set forth in at least one of claims 6 and 7 **characterised in that** the exhaust gas temperature is detected downstream of the oxidation device by means of the temperature sensor (T2), the exhaust gas temperature is detected upstream of the oxidation device by means of the temperature sensor (T1) and the moment in time for the next regeneration operation is established by
on the one hand determining the conversion rate of the oxidation device from the temperature difference between (T1) and (T2), and
on the other hand determining an expectation value for the temperature rise to be expected across the oxidation device from the temperature upstream of the oxidation device, that is detected by the temperature sensor (T1) upstream of the oxidation device.

11. An exhaust gas post-treatment apparatus for an internal combustion engine (1), in particular a stationary internal combustion engine, having an open-loop or closed-loop control device (14), an exhaust gas turbine (6) and an oxidation device (3) for exhaust gases, that is arranged upstream of the exhaust gas turbine (6), wherein exhaust gases from the internal combustion engine (1) can be passed around the oxidation device (3) by way of a bypass conduit (4) and wherein a connection to a gas source is provided in the exhaust gas manifold (2) upstream of the oxidation device (3) and a mixture of combustion gas (G) originating from a gas source and exhaust gas can be fed to the oxidation device (3), **characterised in that** the open-loop or closed-loop control device (14) is adapted to control in open-loop or closed-loop mode the amount of exhaust gas passed around the oxidation device (3) by way of the bypass conduit (4) in dependence on an ascertained exhaust gas temperature downstream of the oxidation device (3), so that a critical temperature of the exhaust gas turbine (6) is not exceeded to protect the exhaust gas turbine (6) arranged downstream of the oxidation device (3).

12. An exhaust gas post-treatment apparatus as set forth in claim 11 **characterised in that** the exhaust gas temperature downstream of the oxidation device (3) can be ascertained by a temperature sensor (T2) arranged downstream of the oxidation device (3) and upstream of the entry mouth of the bypass conduit (4).

13. An exhaust gas post-treatment apparatus as set forth in claim 11 **characterised in that** the exhaust gas temperature downstream of the oxidation device (3) can be ascertained by a temperature sensor (T3) arranged downstream of the entry mouth of the bypass conduit (4) and before the entry mouth into the exhaust gas turbine (6).

14. An exhaust gas post-treatment apparatus as set forth in claim 11 **characterised in that** the exhaust gas temperature downstream of the oxidation device (3) can be ascertained by means of the measuring device for measurement of the combustion gas concentration (15) by measurement of the combustion gas concentration before and after the oxidation device (3).

15. An exhaust gas post-treatment apparatus as set forth in at least one of claims 11 through 14 **characterised in that** the gas source is a gas supply separate from the fuel gas conduit (8), particularly preferably a gas bottle (12).

## Revendications

1. Procédé servant à régénérer un dispositif d'oxydation (3) d'un moteur à combustion interne (1), en particulier d'un moteur à combustion interne stationnaire, dans lequel le dispositif d'oxydation (3) est installé en aval du moteur à combustion interne (1) et dans lequel un mélange composé de gaz de combustion et de gaz d'échappement peut être amené au dispositif d'oxydation (3) servant à augmenter une température dans le dispositif d'oxydation (3) et dans lequel des gaz d'échappement peuvent être guidés autour du dispositif d'oxydation (3) par l'intermédiaire d'un conduit de dérivation (4), dans lequel la quantité des gaz d'échappement guidés autour du dispositif d'oxydation (3) par l'intermédiaire du conduit de dérivation (4) est commandée ou réglée en fonction d'une température des gaz d'échappement déterminée en aval du dispositif d'oxydation (3), **caractérisé en ce qu'**ainsi une température critique d'une turbine à gaz d'échappement (6) n'est pas dépassée afin de protéger la turbine à gaz d'échappement (6) disposée en aval du dispositif d'oxydation (3).

2. Procédé selon la revendication 1, **caractérisé en ce que** la température des gaz d'échappement est déterminée en aval du dispositif d'oxydation (3) par un capteur de température (T2) disposé en aval du dispositif d'oxydation (3) et en amont de l'embouchure du conduit de dérivation (4).

3. Procédé selon la revendication 1, **caractérisé en ce que** la température des gaz d'échappement est déterminée en aval du dispositif d'oxydation (3) par un capteur de température (T3) disposé en aval de l'embouchure du conduit de dérivation (4) et avant l'embouchure dans la turbine des gaz d'échappement (6).

4. Procédé selon la revendication 1, **caractérisé en ce que** la température des gaz d'échappement est déterminée en aval du dispositif d'oxydation (3) par la mesure de la concentration de gaz combustible avant et après le dispositif d'oxydation (3).

5. Procédé selon au moins l'une quelconque des revendications précédentes, **caractérisé en ce qu'**environ 30 % à environ 70 %, de préférence environ 40 % - environ 50 % des gaz d'échappement sont acheminés par le dispositif d'oxydation (3), tandis que le reste des gaz d'échappement est acheminé par le conduit de dérivation (4).

6. Procédé selon au moins l'une quelconque des revendications précédentes, **caractérisé en ce qu'**au cours de la régénération, une concentration d'au moins 5 000 à 7 000 ppm de méthane ou une quantité correspondante en équivalents de méthane est réglée dans le mélange circulant dans le dispositif d'oxydation (3).

7. Procédé selon au moins l'une quelconque des revendications 1 à 5, **caractérisé en ce qu'**au cours de la régénération, une concentration d'au moins 8 000 à 10 000 ppm de méthane ou une quantité correspondante en équivalents de méthane est réglée dans le mélange circulant dans le dispositif d'oxydation (3).

8. Procédé selon au moins l'une quelconque des revendications précédentes, **caractérisé en ce que** l'apport en gaz de combustion est interrompu par intermittence au cours de la régénération du dispositif d'oxydation (3), **en ce que** la température des gaz d'échappement est détectée au moyen du capteur de température (T2) en aval du dispositif d'oxydation, **en ce que** la température des gaz d'échappement est détectée au moyen du capteur de température (T1) en amont du dispositif d'oxydation, et **en ce que** le degré de la régénération est relevé à l'aide de la différence de température entre (T1) et (T2).

9. Procédé selon au moins l'une quelconque des revendications précédentes, **caractérisé en ce que** la température des gaz d'échappement est détectée en aval du dispositif d'oxydation au moyen du capteur de température (T2), **en ce que** la température des gaz d'échappement est détectée en amont du dispositif d'oxydation au moyen du capteur de température (T1), et **en ce que** le moment pour la prochaine régénération est fixé à l'aide de la différence de température déterminée.

10. Procédé selon au moins l'une quelconque des revendications 6 à 7, **caractérisé en ce que** la température des gaz d'échappement est détectée au moyen du capteur de température (T2) en aval du dispositif d'oxydation, **en ce que** la température des gaz d'échappement est détectée au moyen du capteur de température (T1) en amont du dispositif d'oxydation,
**en ce que** le moment pour la prochaine régénération est fixé **en ce que** d'une part le taux de conversion du dispositif d'oxydation est défini à partir de la différence de température entre (T1) et (T2),
et d'autre part une valeur prévisible pour la hausse de température attendue sur le dispositif d'oxydation est définie à partir de la température détectée par le capteur de température (T1) placé en amont du dispositif d'oxydation.

11. Dispositif de traitement ultérieur de gaz d'échappement pour un moteur à combustion interne (1), en particulier un moteur à combustion interne stationnaire, comprenant un dispositif de commande ou de réglage (14), une turbine à gaz d'échappement (6) et un dispositif d'oxydation (3) disposé en amont de la turbine à gaz d'échappement (6) pour des gaz d'échappement, dans lequel des gaz d'échappement peuvent être guidés le long du dispositif d'oxydation (3) par le moteur à combustion interne (1) par l'intermédiaire d'un conduit de dérivation (4), et dans lequel une liaison menant à une source de gaz est prévue dans le conduit de collecte de gaz d'échappement (2) en amont du dispositif d'oxydation (3) et un mélange composé d'un gaz de combustion (G) provenant d'une source de gaz et de gaz d'échappement peut être amené au dispositif d'oxydation (3), **caractérisé en ce que** le dispositif de commande ou de réglage (14) est mis au point afin de commander ou de régler, en fonction d'une température déterminée des gaz d'échappement en aval du dispositif d'oxydation (3), la quantité des gaz d'échappement guidés autour du dispositif d'oxydation (3) par l'intermédiaire du conduit de dérivation (4) de sorte qu'une température critique de la turbine à gaz d'échappement (6) n'est pas dépassée afin de protéger la turbine à gaz d'échappement (6) disposée en aval du dispositif d'oxydation (3).

12. Dispositif de traitement ultérieur de gaz d'échappement selon la revendication 11, **caractérisé en ce que** la température des gaz d'échappement peut être déterminée, en aval du dispositif d'oxydation (3), par un capteur de température (T2) disposé en aval du dispositif d'oxydation (3) et en amont de l'embouchure du conduit de dérivation (4).

13. Dispositif de traitement ultérieur de gaz d'échappement selon la revendication 11, **caractérisé en ce que** la température des gaz d'échappement peut être déterminée en aval du dispositif d'oxydation (3) par un capteur de température (T3) disposé en aval de l'embouchure du conduit de dérivation (4) et avant l'embouchure dans la turbine à gaz d'échappement (6).

14. Dispositif de traitement ultérieur de gaz d'échappement selon la revendication 11, **caractérisé en ce que** la température des gaz d'échappement peut être déterminée en aval du dispositif d'oxydation (3) au moyen du dispositif de mesure servant à mesurer la concentration de gaz combustible (15) en mesurant la concentration de gaz combustible avant et après le dispositif d'oxydation (3).

15. Dispositif de traitement ultérieur de gaz d'échappement selon au moins l'une quelconque des revendications 11 à 14, **caractérisé en ce que** la source de gaz est soit le conduit de gaz propulseur (8) soit une alimentation en gaz séparée du conduit de gaz propulseur (8), en particulier de manière préférée une bouteille de gaz (12).
